(19) Europäisches Patentamt
European Patent Office
Office européen des brevets

(11) **EP 4 224 054 A1**

(12) **EUROPEAN PATENT APPLICATION**
published in accordance with Art. 153(4) EPC

(43) Date of publication:
**09.08.2023 Bulletin 2023/32**

(21) Application number: **21875467.9**

(22) Date of filing: **24.09.2021**

(51) International Patent Classification (IPC):
***F21S 2/00*** (2016.01) ***B32B 5/18*** (2006.01)
***B32B 7/023*** (2019.01) ***F21V 8/00*** (2006.01)
***G02B 5/00*** (2006.01) ***G02B 6/00*** (2006.01)
***F21Y 115/10*** (2016.01) ***F21Y 115/30*** (2016.01)

(52) Cooperative Patent Classification (CPC):
**B32B 5/18; B32B 7/023; F21S 2/00; G02B 5/00; G02B 6/00;** F21Y 2115/10; F21Y 2115/30

(86) International application number:
**PCT/JP2021/035207**

(87) International publication number:
**WO 2022/071165 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020 JP 2020163478**

(71) Applicant: **Nitto Denko Corporation**
**Ibaraki-shi, Osaka 567-8680 (JP)**

(72) Inventors:
- **MATSUO, Naoyuki**
**Ibaraki-shi, Osaka 567-8680 (JP)**
- **YOSHIKAWA, Takahiro**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

# (54) OPTICAL MEMBER, MANUFACTURING METHOD THEREFOR, AND LIGHT DISTRIBUTION ELEMENT

(57) An optical member (100) that functions as an optical coupling layer has a first layer (10) having a porous structure, and a second layer (20) contacting a first main surface of the first layer. The second layer (20) includes a resin composition, and has a transmittance of 5% to 85% with regard to a first light that is within the wavelength range of greater than 800 nm and less than or equal to 2000 nm. The first layer (10) includes a first region (12) having the porous structure, and a second region (14) in which pores of the porous structure are filled with a resin composition.

*FIG.1*

100
40
20
10
30
12
14

EP 4 224 054 A1

## Description

### TECHNICAL FIELD

The present invention relates to an optical member, a production method thereof, and a light distribution element.

### BACKGROUND ART

As a method of extracting light from a light guiding layer, a method that provides concave-convex shapes on the surface of the light guiding layer is known. However, it is difficult to accurately form precise concave-convex shapes on the surface of the light guiding layer.

Patent Document 1 discloses a method in which a variable-index light extraction layer is formed on a light guiding layer, such that two regions of different refractive indices are geometrically arranged in the variable-index light extraction layer, whereby guided-mode light is selectively extracted from the light guiding layer. The two regions of different refractive indices in the variable-index light extraction layer are formed by selectively printing nanovoided polymer materials of different refractive indices.

Patent Document 2 discloses a method for forming a light extraction layer having two regions of different refractive indices in a less complicated manner than in the method of Patent Document 1. According to Patent Document 2, for example, a pressure-sensitive adhesive layer is formed on a porous layer; the pressure-sensitive adhesive layer is irradiated with laser light in a predetermined pattern; and pores in the porous layer are filled with the melted pressure-sensitive adhesive, whereby a light extraction layer is formed in which a low-refractive index region (having pores left therein) and high-refractive index regions (whose pores have been filled with the pressure-sensitive adhesive) are arranged in a predetermined pattern.

The entire disclosure of Patent Document 2 is incorporated herein by reference. In the present specification, the light extraction layer in Patent Document 2 may be referred to as a "light coupling layer". Moreover, as used in the meaning of Patent Document 2, "extracting light" may be expressed herein as "taking out light" or "coupling light".

### CITATION LIST

### PATENT LITERATURE

[Patent Document 1] Japanese National Phase PCT Laid-Open Publication No. 2015-534100 (International Publication No. 2014/031726)
[Patent Document] International Publication No. 2019/182100

### SUMMARY OF INVENTION

### TECHNICAL PROBLEM

Studies by the inventors have discovered cases where it is difficult to efficiently form e.g. relatively high-definition patterns with the method described in Patent Document 2, which utilizes laser light irradiation.

Accordingly, an objective of the present invention is to provide a method of forming a light coupling layer (light-extracting layer) having a relatively high-definition pattern, in a manner more efficient than with conventional methods. A further objective of the present invention is to provide: an optical member including such a light coupling layer, and a production method thereof; and a light distribution element including such an optical member.

### SOLUTION TO PROBLEM

According to embodiments of the present invention, means for solution as recited in the following Items are provided.

[Item 1]

An optical member comprising:

a first layer having a porous structure; and

a second layer that is in contact with a first main surface of the first layer, wherein,
the second layer contains a resin composition, and has a transmittance of not less than 5% and not more than 85% with respect to first light that is in a wavelength range greater than 800 nm but smaller than or equal to 2000 nm; and
the first layer includes a first region having the porous structure, and a second region in which pores in the porous structure are filled with the resin composition.

[Item 2]

The optical member of Item 1, wherein the second layer has an adhesive property.

[Item 3]

The optical member of Item 2, further comprising a release sheet that is disposed on an opposite side of the second layer from the first layer.

[Item 4]

The optical member of any one of Items 1 to 3, wherein the resin composition contains a coloring material that absorbs the first light.

[Item 5]

The optical member of any one of Items 1 to 4, wherein the second layer has a transmittance of 70% or less with respect to the first light.

[Item 6]

The optical member of any one of Items 1 to 5, wherein, given a refractive index $n_1$ of the first region, a refractive index $n_2$ of the second region, and a refractive index $n_3$ of the second layer, $n_1<n_2$ and $n_1<n_3$ are satisfied.

[Item 7]

The optical member of Item 6, wherein $n_1$ is 1.30 or less, and $n_2$ is 1.43 or more.

[Item 8]

The optical member of any one of Items 1 to 7, wherein the resin composition contains a photocurable resin.

[Item 9]

The optical member of any one of Items 1 to 8, wherein the first layer contains porous silica.

[Item 10]

A light distribution element comprising:

the optical member of any of Items 1 to 9; and
a light guiding layer disposed at the first layer side.

[Item 11]

The light distribution element of Item 10, further comprising a redirection layer that is disposed on an opposite side of the optical member from the light guiding layer.

[Item 12]

A method of producing an optical member including a first layer having a porous structure and a second layer that is in contact with a first main surface of the first layer,

the second layer containing a resin composition, and
the first layer including a first region having the porous structure, and a second region in which pores in the porous structure are filled with the resin composition, wherein the method comprises:

step A of providing a stack that includes a porous layer having a porous structure and an infrared-absorbing resin composition layer containing a resin composition, the infrared-absorbing resin composition layer having a transmittance of not less than 5% and not more than 85% with respect to first light that is in a wavelength range greater than 800 nm but smaller than or equal to 2000 nm; and
step B of selectively irradiating only a predetermined region of the infrared-absorbing resin composition layer of the stack with the first light to fill pores in the porous structure of the porous layer with the resin composition contained in the predetermined region of the infrared-absorbing resin composition layer.

[Item 13]

The production method of Item 12, wherein the infrared-absorbing resin composition layer contains the resin composition and a coloring material that absorbs the first light.

[Item 14]

The production method of Item 12 or 13, wherein step A comprises step A1 of forming the infrared-absorbing resin composition layer on the porous layer.

[Item 15]

The production method of Item 14, wherein step A1 comprises a step of forming the infrared-absorbing resin composition layer by using a material obtained by mixing the resin composition and the coloring material.

[Item 16]

The production method of Item 14, wherein step A1 step comprises a step of forming a resin composition layer made of the resin composition, and forming a coloring material layer containing the coloring material on the resin composition layer.

[Item 17]

The production method of any one of Items 12 to 16, wherein,

the resin composition contains a photocurable resin; and
the method further comprises, after step B, a step of curing the photocurable resin.

## ADVANTAGEOUS EFFECTS OF INVENTION

According to embodiments of the present invention, there is provided a method of forming a light extraction layer having a relatively high-definition pattern, in a manner more efficient than with conventional methods. Furthermore, there are provided: an optical member including such a light extraction layer, and a production method thereof; and a light distribution element including such an optical member.

## BRIEF DESCRIPTION OF DRAWINGS

[FIG. **1**] A schematic cross-sectional view of an optical member **100** according to an embodiment of the present invention.
[FIG. **2**] A schematic cross-sectional view of a light distribution element **200A** that includes an optical member **100a** according to an embodiment of the present invention.
[FIG. **3**] A schematic cross-sectional view of a light distribution element **200B** that includes an optical member **100b** according to an embodiment of the present invention.
[FIG. **4A**] A schematic plan view showing an example arrangement of a first region **12a** and second regions **14a** in a first layer **10a** included in an optical member according to an embodiment of the present invention.
[FIG. **4B**] A schematic plan view showing an example arrangement of a first region **12b** and second regions **14b** in a first layer **10b** included in an optical member according to an embodiment of the present invention.
[FIG. **5A**] A schematic cross-sectional view showing one step of a production process for the optical member **100.**
[FIG. **5B**] A schematic cross-sectional view showing one step of a production process for the optical member **100.**
[FIG. **5C**] A schematic cross-sectional view showing one step of a production process for the optical member **100.**
[FIG. **5D**] A schematic cross-sectional view showing one step of a production process for the optical member **100.**
[FIG. **6**] A cross-sectional view schematically showing the configuration of a light distribution element sample.
[FIG. **7A**] A schematic cross-sectional view of a patterned film **70.**
[FIG. **7B**] A schematic cross-sectional view showing dents **74** in the patterned film **70.**
[FIG. **8**] A diagram showing a cross-sectional SEM image of an optical member obtained according to Example 3.
[FIG. **9**] A schematic cross-sectional view of a light distribution element **200C** according to an embodiment of the present invention.
[FIG. **10**] A schematic cross-sectional view of a light distribution element **200D.**

## DESCRIPTION OF EMBODIMENTS

Hereinafter, with reference to the drawings, an optical member, a production method for an optical member, and a light distribution element including an optical member according to embodiments of the present invention will be described. Embodiments of the present invention are not limited to what will be illustrated below.

An optical member according to an embodiment of the present invention is able to allow light propagating in a light guiding layer to be taken out from a main surface of the light guiding layer, or guide it to an optical member that is disposed in contact with the main surface. Guiding light propagating in a light guiding layer to an optical member that is disposed in contact with a main surface of the light guiding layer is expressed as optically coupling it, and a layer that acts in this manner is referred to as a light coupling layer. For example, an optical member according to an embodiment of the present invention can be suitably used as a light coupling layer that is included in a lightguide member described in Japanese Patent Application No. 2020-127530 (fling date: July 28, 2020) filed by the Applicant of the present application, for example. As is described in the above patent application, the light coupling layer can be provided between a light guiding layer and a redirection layer. The redirection layer includes a plurality of internal spaces, which create interfaces that cause light to be directed toward a main surface of the redirection layer through total internal reflection, for example. The redirection layer having such internal spaces may be a light distribution structure that is disclosed in International Publication No. 2019/087118, for example. The redirection layer may be a known prism sheet. The entire disclosure of Japanese Patent Application No. 2020-127530 and International Publication No. 2019/087118 is incorporated herein by reference.

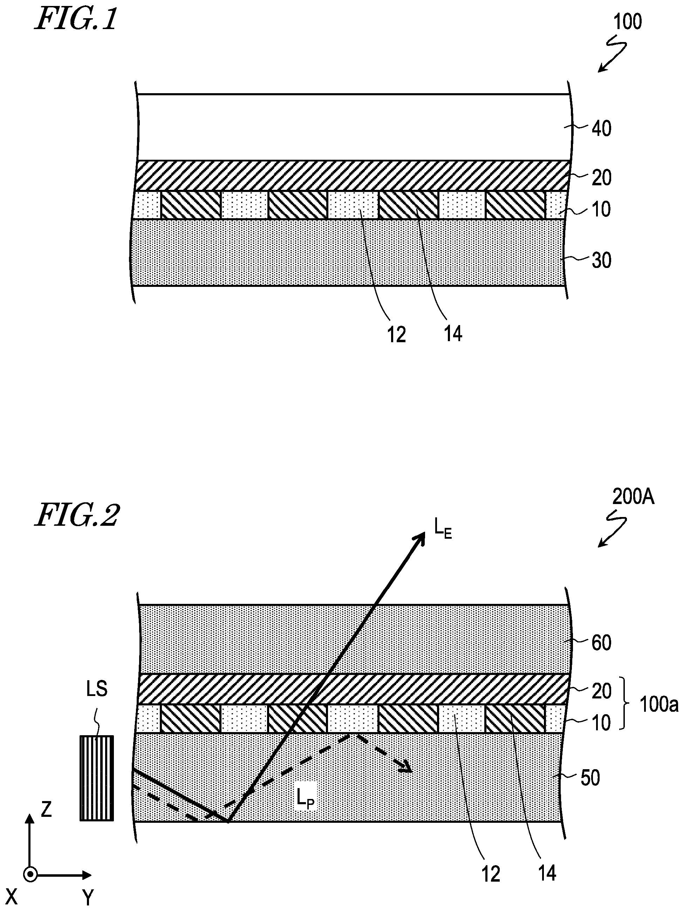

FIG. **1** shows a schematic cross-sectional view of an optical member **100** according to an embodiment of the present invention. The optical member **100** includes: a first layer **10** having a porous structure; and a second layer **20** that is in contact with a first main surface of the first layer **10.** The second layer **20** contains a resin composition, and has a transmittance of not less than 5% and not more than 85% with respect to first light that is in a wavelength range greater than 800 nm but smaller than or equal to 2000 nm. The first layer **10** includes: a first region **12** having a porous structure; and a second region **14** in which pores in the porous structure are filled with the resin composition.

As is the case with the optical member **100** exemplified herein, an optical member according to an embodiment of the present invention may include a base layer **30** that supports the first layer **10** having a porous structure. In the case where the second layer **20** has an adhesive property, it may include a release sheet (separator) **40** that is disposed on an opposite side of the second layer **20** from the first layer **10.** The base layer **30** and/or the release sheet **40** may be omitted.

The second layer **20** contains the resin composition, and has a transmittance of not less than 5% and not more than 85% with respect to first light that is in a wavelength range greater than 800 nm but smaller than or equal to 2000 nm. In other words, because the second layer **20** absorbs the first light (near-infrared rays), the second layer **20** can be efficiently heated by being irradiated with the first light. As a result, the resin composition in a region of the second layer **20** that has been irradiated with the first light is melted, so that the pores in the porous structure of the first layer **10** are selectively filled with the resin composition. The first region **12** having a porous structure will have a smaller refractive index than that of the second region **14,** in which pores in the porous structure are filled with the resin composition.

Assuming that the first region **12** has a refractive index $n_1$, the second region **14** has a refractive index $n_2$, and the second layer **20** has a refractive index ns, it holds that $n_1<n_2$ and $n_1<n_3$. Herein, the relationship $n_2<n_3$ is satisfied, for example. $n_1$ may be e.g. 1.30 or less; $n_2$ may be e.g. 1.43 or more; and $n_3$ may be e.g. 1.45 or more.

The first layer **10** may be made of a porous silica, for example. The porous silica has a porosity greater than 0% but smaller than 100%. In order to obtain a low refractive index, the porosity is preferably 40% or more, even more preferably 50% or more, and more preferably 55% or more. Although not particularly limited, from the standpoint of strength, the upper limit of the porosity is preferably 95% or less, and even more preferably 85% or less.

Silica (the matrix portion of porous silica) preferably has a refractive index of e.g. not less than 1.41 and not more than 1.43. The second layer **20** may be made of various resin compositions. A general resin has a refractive index of essentially not less than 1.45 and not more than 1.70. The resin composition may contain a photocurable resin. By adjusting the porosity of the porous structure included in the first layer **10** and the refractive index $n_3$ of the resin composition contained in the second layer **20,** it is possible to control the refractive index $n_2$ of the second region **14.** Preferably, $|n_2-n_3|$ is 0.1 or less. Total internal reflection can be restrained from occurring at the interface between the second layer **20** and the second region **14** of the first layer **10.**

By disposing the first region **12** and the second region **14** in a predetermined pattern, a first layer **10** functioning as a light coupling layer can be obtained, for example. The light coupling layer is to be disposed between two optical layers, e.g., a light guiding layer and a redirection layer, and guides a portion of light propagating in the light guiding layer to the redirection layer. The redirection layer has an interface (or a surface) that allows the propagating light to have a component in the normal direction of the layer, for example. The redirection layer may be a prism sheet, for example.

Because the second layer **20** absorbs the first light, the second layer **20** can be efficiently heated by being irradiated with the first light. This makes it possible to efficiently form a relatively high-definition pattern than by conventional methods. The transmittance of the second layer **20** with respect to the first light is even more preferably 70% or less, and still more preferably 65% or less.

In general, organic substances absorb infrared rays, as is known from the fact that infrared spectroscopy is employed in identifying them. The wavelength range (fingerprint region) of infrared rays that is used in identifying an organic substance is 400 $cm^{-1}$ to 4000 $cm^{-1}$ in wave number, and 2.5 um to 25 um in wavelength; therefore, general organic substances hardly absorb infrared rays having a wavelength of 2 um (20000 nm) or less. An organic substance that absorbs infrared rays may be called an infrared-absorbing dye.

The resin composition contained in the second layer **20** includes a resin composition that hardly absorbs the first light and a coloring material that absorbs the first light, for example. The coloring material may contain a dye (or a dyestuff), and the coloring material may contain a pigment. Note that a dye (or dyestuff) refers to a coloring material that is soluble in a solvent (e.g., water or alcohol), while a pigment refers to a coloring material that is insoluble or slightly soluble in a solvent. Note that an atomic group that absorbs the first light may be introduced chemically (i.e., via a chemical bond) into the resin that is contained in the resin composition itself.

The first light is preferably in a wavelength range of not less than 900 nm and not more than 1500 nm, and still more preferably 1200 nm or less. The first light is preferably laser light, and is preferably emitted from a solid-state laser emit. LEDs may be used. The first light has a half-width of e.g. 100 nm or less. The amount of light irradiation needed to form the second region can be obtained by adjusting the intensity of light for irradiation, irradiation time, etc. As necessary, converging optics such as a lens(es) may be used.

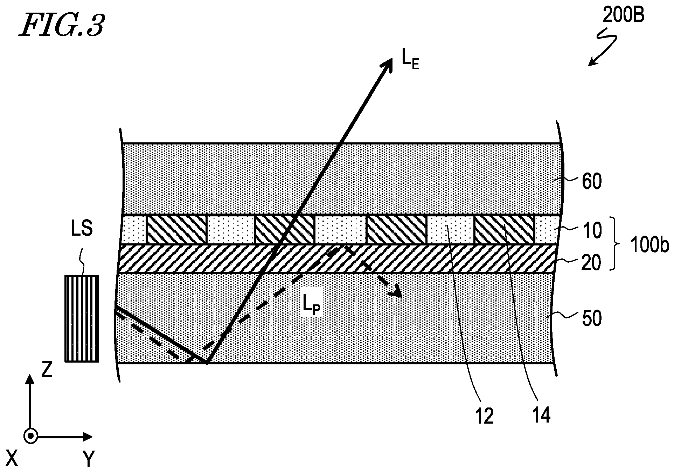

Next, with reference to FIG. **2** and FIG. **3,** the configurations and functions of light distribution elements **200A** and **200B** according to embodiments of the present invention will be described.

The light distribution element **200A** shown in FIG. **2** includes: an optical member **100a;** and a light guiding layer **50** that is disposed at the first layer **10** side of the optical member **100a.** On the opposite side of the optical member **100a** from the light guiding layer **50,** a base layer **60** is disposed. The base layer **60** may be replaced by a redirection layer (e.g., a prism sheet), for example. For simplicity of explanation, an example will be described where a transparent base layer **60** having a flat main surface is provided in contact with the second layer **20.** The base layer **60** may be made of a similar material to that of the light guiding layer **50.**

Herein, it is assumed that the first layer **10,** the second layer **20,** the light guiding layer **50,** and the base layer **60** of the optical member **100a** have main surfaces that are parallel to the XY plane. Light that is emitted from a light source **LS** toward a light-receiving end surface of the light guiding layer **50** (not shown) propagates in the Y direction within the light guiding layer **50** (waveguided light $\mathbf{L_P}$). A portion of the light entering the light guiding layer **50** is optically coupled to the base layer **60** (taken out) by the optical member **100a,** and is emitted in the Z direction (outgoing light $\mathbf{L_E}$). It will be appreciated that the direction of light propagation has some variation (distribution) from the Y direction, and the outgoing direction of light also has some variation (distribution) from the Z direction. The X direction is orthogonal to the Y direction and the Z direction.

The light $\mathbf{L_P}$ propagating in the light guiding layer **50** undergoes total internal reflection at an interface between the light guiding layer **50** and the first region **12** of the first layer **10** and at an interface between the light guiding layer **50** and the air, and propagates in the Y direction. Within the light entering the light guiding layer **50,** the light that is incident on the interface between the light guiding layer **50** and the second region **14** of the first layer **10** passes through the second layer **20** and the base layer **60** without undergoing total internal reflection, and is emitted from the light distribution element **200A.**

The arrangement of the optical member is not limited to the example of FIG. **2.** As in the light distribution element **200B** shown in FIG. **3,** the second layer **20** of the optical member **100b** may be disposed at the light guiding layer **50** side, whereas the first layer **10** of the optical member **100b** may be disposed at the base layer **60** side. Herein, light $\mathbf{L_P}$

propagating in the light guiding layer **50** undergoes total internal reflection at the interface between the second layer **20** and the first region **12** of the first layer **10,** whereas light that is incident on the interface between the second layer **20** and the second region **14** of the first layer passes through the second region **14** of the first layer **10** and the base layer **60** without undergoing total internal reflection, and is emitted from the light distribution element **200B.**

By adjusting the arrangement of the first region **12** and the second region **14** of the first layer **10** within the layer plane (parallel to the XY plane), the intensity distribution (emission intensity distribution, emission angle distribution, etc.) of the light that is taken out (i.e., optically coupled to the base layer **60**) from the light guiding layer **50** by the optical member **100a** can be controlled.

The arrangement of the first region **12** and the second region **14** in the first layer **10** can be appropriately set in accordance with the required intensity distribution.

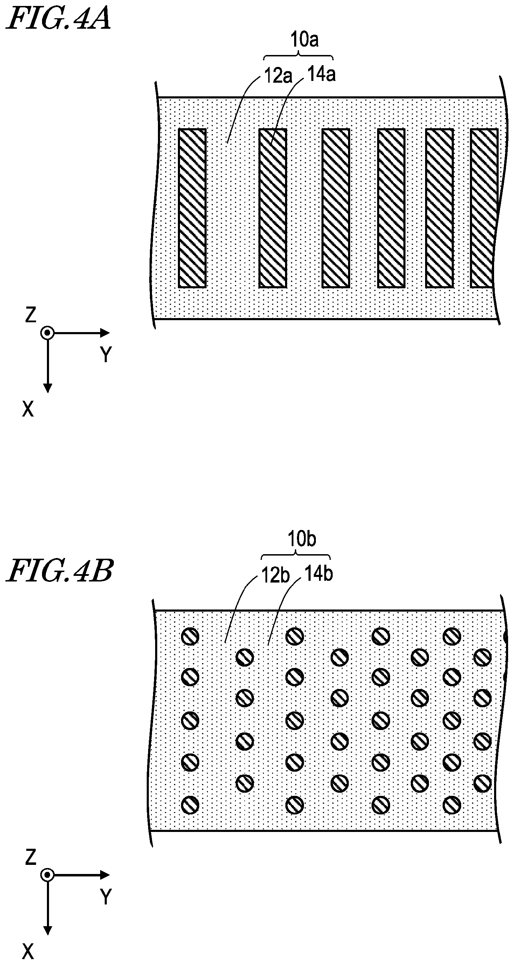

A first layer **10a** shown in FIG. **4A** includes a plurality of rectangular second regions **14a,** which are elongated along the X direction, being arrayed at intervals along the Y direction in the first region **12a.** The intervals of the plurality of rectangular second regions **14a** become narrower in the Y direction. In other words, the second regions **14a** are disposed so that their density increases in the Y direction. This is to ensure that light that enters the light guiding layer from a light source (not shown) that is disposed on the lefthand side of FIG. **4A** and propagates in the Y direction is uniformly emitted in the Z direction irrespective of the distance from the light source.

A first layer **10b** shown in FIG. **4B** includes a plurality of circular second regions **14b** being discretely disposed in a first region **12b.** A plurality of second regions **14b** arranged in one row along the X direction are disposed corresponding to a rectangular second region **14a** that is elongated along the X direction in FIG. **4A.** The second regions **14b** are disposed so that their density increases in the Y direction.

Thus, the arrangement of the first region **12** and the second regions **14** in the first layer **10** may be modified in various ways. The individual shapes of the second regions **14** are not limited to rectangles or circles, but may take various shapes. It is also possible to use rectangular second regions **14a** and circular second regions **14b** in combination.

The shapes and dimensions of the second regions **14,** their density within the plane of the first layer **10,** and their occupancy in the first layer **10** may be appropriately changed in accordance with the purpose and applications for which the optical member is used. For example, in the case where good visibility, e.g., transparency, is required, the longer dimension of each second region **14** is 100 um or less, and more preferably 70 um or less. For example, as shown in FIG. **4B,** in the case of circular second regions **14,** preferably the circle has a diameter of 100 um or less. In applications where a device that incorporates the optical member is to be observed at a relatively close distance, e.g., a mobile display or small-sized signage, the second regions **14** can be restrained from being visually recognized.

Next, exemplary component elements that are suitably used for a light distribution element according to an embodiment of the present invention will be described.

(light guiding layer)

As the light guiding layer, a broad range of known light guiding layers (lightguides) can be used. The light guiding layer may typically be composed of a film or plate-like member of resin (preferably a transparent resin). The resin may be a thermoplastic resin or a photocurable resin. The thermoplastic resin may be (meth)acrylic resins such as polymethyl methacrylate (PMMA) and polyacrylonitrile, polycarbonate (PC) resins, polyester resins such as PET, cellulose-based resins such as triacetyl cellulose (TAC), cyclic polyolefin-based resins, and polystyrene-based resins, for example. As the ionizing radiation-curable resin, for example, photocurable resins such as epoxy acrylate-based resins and urethane acrylate-based resins are suitably used. These resins may each be used alone by itself, or any two or more of them may be used in combination.

The thickness of the light guiding layer may be e.g. not less than 100 um and not more than 100 mm. The thickness of the light guiding layer is preferably 50 mm or less, more preferably 30 mm or less, and even more preferably 10 mm or less.

The refractive index $n_{GP}$ of the light guiding layer may have a value in the range from -0.1 to +0.1 relative to the refractive index $n_3$ of the second layer, for example, and its lower limit value is preferably 1.43 or more, and more preferably 1.47 or more. On the other hand, the upper limit value of the refractive index of the light guiding layer is 1.7.

In the case where the first region of the first layer is disposed so as to be directly in contact with the light guiding layer (see FIG. **2**), the refractive index $n_{GP}$ of the light guiding layer is set so that light undergoes total internal reflection at the interface between the light guiding layer and the first region of the first layer. In the case where the first region of the first layer is disposed via a second layer on the light guiding layer (see FIG. **3**), the refractive index $n_1$ of the first region and the refractive index $n_3$ of the second layer are set so that light undergoes total internal reflection at the interface between the second layer and the first region, and the refractive index $n_{GP}$ of the light guiding layer and the refractive index $n_2$ of the second region are set so that total internal reflection is unlikely to occur at the interface between the light guiding layer and the second region. Preferably, $|n_{GP}-n_2|$ is 0.1 or less.

While a conventional light guiding layer having concave-convex shapes on its surface might be used as the light guiding layer, a light guiding layer having a substantially flat surface can be suitably used, as in the light guiding layer **50** shown in FIG. **2** and FIG. **3.** Because the optical member **100** according to an embodiment of the present invention, functioning as a light coupling layer, has a substantially flat main surface, it can be easily layered with the light guiding layer **50** having a substantially flat surface, and easily layered with another optical element having a substantially flat surface. A substantially flat surface refers to lack of refraction or diffuse reflection of light as caused by concave-convex patterns on the surface.

(porous layer, first region of first layer)

The first layer has a porous structure. The first layer may be made of a porous layer. Porous layers suitably used as the first layer include silica particles, silica particles with micropores, essentially spherical particles such as silica hollow nanoparticles, fibrous particles such as cellulose nanofibers, alumina nanofibers, silica nanofibers, and flat-plate particles such as nanoclay composed of bentonite. In one embodiment, the porous layer is a porous material composed of particles (e.g., micropored particles) that are chemically bonded directly to one another. The particles composing the porous layer may be at least partially bonded to one another via a small amount (e.g., less than the mass of the particles) of a binder component. The porosity and refractive index of the porous layer can be adjusted based on the particle size, particle size distribution, and the like of the particles composing the porous layer.

Examples of methods of obtaining a porous layer include a method of forming a low-refractive index layer described in International Publication No. 2019/146628, and methods described in Japanese Laid-Open Patent Publication No. 2010-189212, Japanese Laid-Open Patent Publication No. 2008-040171, Japanese Laid-Open Patent Publication No. 2006-011175, International Publication No. 2004/113966, Japanese Laid-Open Patent Publication No. 2017-054111, Japanese Laid-Open Patent Publication No. 2018-123233, and Japanese Laid-Open Patent Publication No. 2018-123299, as well as the references mentioned therein. The entire disclosure of these publications is incorporated herein by reference.

As the porous layer, porous silica can be suitably used. Porous silica can be produced by the following methods, for example: a method involving hydrolyzing and polycondensing at least one of silicon compounds, hydrolyzable silanes and/or silsesquioxanes, and their partial hydrolysates and dehydration-condensation products; a method that uses porous particles and/or hollow microparticles; and a method that generates an aerogel layer using the springback phenomenon, a method of pulverizing a gelatinous silicon compound obtained by sol-gel processing and using a pulverized gel in which micropored particles as the resultant pulverized body are chemically bonded to one another with a catalyst or the like; and so on. However, the porous layer is not limited to porous silica, and the production method is not limited to the exemplified production methods; any production method may be used for the production. Silsesquioxane is a silicon compound with ($RSiO_{1.5}$; where R is a hydrocarbon group) as the basic structural unit. Although silsesquioxane is not exactly the same as silica, whose basic structural unit is $SiO_2$, it has a network structure cross-linked by siloxane bonds, similarly to silica. Therefore, any porous material that contains silsesquioxane as its basic structural unit is also referred to as porous silica or silica-based porous material.

Porous silica may be composed of micropored particles of a gelatinous silicon compound that are bonded to one another. An example of micropored particles of a gelatinous silicon compound is a pulverized body of the gelatinous silicon compound. Porous silica may be formed by coating a base with a coating solution that contains a pulverized body of a gelatinous silicon compound, for example. The pulverized body of the gelatinous silicon compound may be chemically bonded (e.g., siloxane bonded) through catalytic action, light irradiation, heating, or the like, for example.

The lower limit value of the thickness of the porous layer (first layer) may be any value that is greater than the wavelength of light used, for example. Specifically, the lower limit value is e.g. 0.3 um or more. Although the upper limit value of the thickness of the first layer is not particularly limited, it is e.g. 5 um or less, and more preferably 3 um or less. So long as the thickness of the first layer is within the above range, the concave and convex parts of the surface will not be so large as to affect layering, and therefore it can be easily made into a composite or layered with another member.

The refractive index of the porous layer, i.e., the refractive index $n_1$ of the first region of the first layer, is preferably 1.30 or less. This makes total internal reflection likely to occur at the interface with the first region, i.e., makes the critical angle small. The refractive index n1 of the first region is more preferably 1.25 or less, even more preferably 1.18 or less, and particularly preferably 1.15 or less. Although the lower limit of $n_1$ is not particularly limited, it is 1.05 or more from the standpoint of mechanical strength.

The lower limit value of the porosity of the porous layer, i.e., the porosity of the first region of the first layer, is e.g. 40% or more, preferably 50% or more, more preferably 55% or more, and still more preferably 70% or more. The upper limit value of the porosity of the porous layer is e.g. 90% or less, and more preferably 85% or less. Because of the porosity being in the above ranges, the refractive index of the first region can be kept in an appropriate range. The porosity can be calculated from the refractive index value measured with an ellipsometer, Lorentz-Lorenz’s formula, for example.

The film density of the porous layer, i.e., the film density of the first region of the first layer, is e.g. 1 g/cm$^3$ or

more, preferably 10 $g/cm^3$ or more, and more preferably 15 $g/cm^3$ or more. On the other hand, the film density is e.g. 50 $g/cm^3$ or less, preferably 40 $g/cm^3$ or less, more preferably 30 $g/cm^3$ or less, and even more preferably 2.1 $g/cm^3$ or less. The range of film density is e.g. not less than 5 $g/cm^3$ and not more than 50 $g/cm^3$, preferably not less than 10 $g/cm^3$ and not more than 40 $g/cm^3$, and more preferably not less than 15 $g/cm^3$ and not more than 30 $g/cm^3$. Alternatively, this range is e.g. not less than 1 $g/cm^3$ and not more than 2.1 $g/cm^3$. Film density may be measured by known methods.

(second region of first layer)

The second region of the first layer is formed as the pores in the porous layer are filled with the resin composition contained in the second layer. The refractive index $n_2$ of the second region satisfies the relationships $n_1<n_2$ and $n_1<n_3$ with the refractive index $n_1$ of the first region and the refractive index $n_3$ of the second layer. Because $n_2$ satisfies the above relationship, light scattering due to reflection and refraction at an interface between the first region and the second region along the planar direction of the first layer can be suppressed. The lower limit value of $n_2$ is e.g. greater than 1.30, preferably 1.35 or more, and more preferably 1.40 or more.

The first region and the second region of the first layer are composed of a common porous layer. In other words, the first layer has a porous structure that is continuous throughout the entire first region and second region. Given a refractive index $n_M$ of the material composing the matrix portion (i.e., the portion other than the pores in the porous layer) of the porous layer, the refractive index of the porous layer, i.e., the refractive index $n_1$ of the first region, is determined by nm, the porosity, and the refractive index of air; on the other hand, the refractive index $n_2$ of the second region is determined by nm, the porosity, the refractive index $n_3$ of the second layer (resin composition), and the fill factor of the resin composition with respect to the pores. For example, as described above, using porous silica as the porous layer will provide for the relationship $n_1<n_2<n_3$ when $n_M$ is e.g. not less than 1.41 and not more than 1.43 and the refractive index of the resin is greater than $n_M$ (e.g., not less than 1.45 and not more than 1.70).

Because the second region of the first layer is formed by filling the pores with the resin composition, an improved adhesion with the other optical elements (e.g., the light guiding layer) of the first layer can be provided. This can also improve the mechanical strength of the first layer. In particular, when the resin composition has an adhesive property (including a pressure-sensitive adhesive property), high effects of improving the adhesion and mechanical strength are obtained.

(second layer)

The lower limit value of the refractive index $n_3$ of the second layer is e.g. 1.45 or more, and preferably 1.47 or more. On the other hand, the upper limit of the refractive index $n_3$ of the second layer is e.g. 1.70 or less, although not particularly limited. From optical standpoints, the refractive index ($n_3$) of the second layer preferably has a value which is equal or close to the refractive index of an optical element (e.g., the light guiding layer, the base layer, or the redirection layer) that is disposed in contact with the second layer (or via an adhesive layer). The difference between the refractive index of the second layer and the refractive index of any optical element that is disposed in proximity to the second layer is preferably 0.1 or less, and even more preferably 0.05 or less.

As for the thickness of the second layer, although it is not particularly limited so long a sufficient strength for supporting the first layer is provided, its lower limit value is e.g. 1 um or more, preferably 5 um or more, and more preferably 10 um or more. The upper limit value of the thickness of the second layer is e.g. 200 um or less, and preferably 150 um or less.

The second layer is formed by using a resin composition. The resin composition has a transmittance of not less than 5% and not more than 85% with respect to the first light that is in a wavelength range greater than 800 nm but smaller than or equal to 2000 nm. The resin composition contains a resin composition that hardly absorbs the first light and a coloring material that absorbs the first light, for example.

The resin composition preferably has an adhesive property, and particularly a pressure-sensitive adhesive property (i.e., tackiness). As the resin composition composing the second layer, a pressure-sensitive adhesive can be suitably used. The pressure-sensitive adhesive is preferably such that: under normal temperature and pressure conditions or under heating conditions such as the aging step to be described later, the pressure-sensitive adhesive has a sufficient storage modulus of elasticity not to permeate the pores in the porous structure of the first region of the first layer; and, with irradiation of the first light, the pressure-sensitive adhesive melts or softens, permeates the pores in the porous structure, so that the pores can be filled with the resin composition. From these standpoints, a lower limit value of the storage modulus of elasticity of the pressure-sensitive adhesive is preferably $1.0\times10^5$ (Pa) or more, and more preferably $1.2\times10^5$ (Pa) or more. The upper limit value which is $1.0\times10^6$ (Pa) or less. An upper limit value of the storage modulus of elasticity of the pressure-sensitive adhesive is e.g. $1.0\times10^6$ (Pa) or less. Although the molecular weight (mass average molecular weight) of the resin composition is not particularly limited so long as the resin composition is able to permeate the pores in the porous structure, the resin composition contains a component with a molecular weight of 100,000 or less, 70,000 or less, 50,000 or less, 30,000 or less, or 10,000 or less, for example.

As the pressure-sensitive adhesive, any of a broad range of commonly-available pressure-sensitive adhesives can be used so long as it has the aforementioned characteristics. For example, an acrylic, urethane-based, ester-based, or silicone-based pressure-sensitive adhesive can be used. Alternatively, a rubber-based (e.g., polybutadiene-based, nitrile-based, or chloroprene-based) pressure-sensitive adhesive may be used.

An acrylic pressure-sensitive adhesive typically contains a (meth)acrylic polymer as a main component (base polymer). The (meth)acrylic polymer may be contained in the pressure-sensitive adhesive at a rate of e.g. 50 mass% or more, preferably 70 mass% or more, and more preferably 90 mass% or more, of the solids content of the pressure-sensitive adhesive. As the monomer unit, the (meth)acrylic polymer contains alkyl (meth)acrylate as a main component. Herein, (meth)acrylate refers to acrylate and/or methacrylate. An example of the alkyl group of the alkyl (meth) acrylate may be a linear- or branched-chain alkyl group having 1 to 18 carbon atoms. The average number of carbon atoms in the alkyl group is preferably from 3 to 9. Other than alkyl (meth)acrylate, the monomer to compose the (meth) acrylic polymer may include a carboxyl group-containing monomer, a hydroxyl group-containing monomer, an amide group-containing monomer, an aromatic ring-containing (meth)acrylate, a heterocyclic ring-containing (meth)acrylate, and other comonomers. The comonomers are preferably hydroxyl group-containing monomers and/or heterocyclic ring-containing (meth)acrylates, and more preferably N-acryloyl morpholine. The acrylic pressure-sensitive adhesive can preferably contain a silane coupling agent and/or a cross-linking agent. An example of the silane coupling agent may be a silane coupling agent containing an epoxy group. Examples of the cross-linking agent include isocyanate-based cross-linking agents and peroxide-based cross-linking agents. Details of such pressure-sensitive adhesives are described, for example, in Japanese Patent No. 4140736, the disclosure of which is incorporated herein by reference.

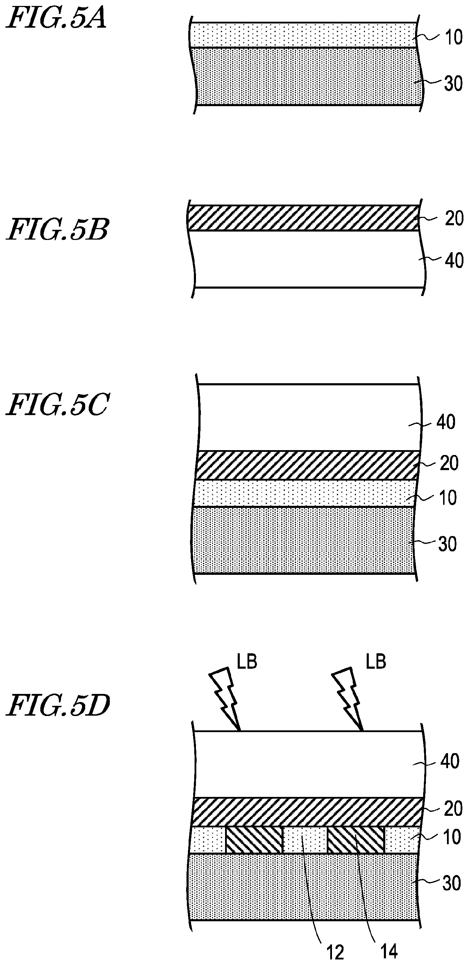

A production method for an optical member according to an embodiment of the present invention includes: a step of providing a stack that includes a porous layer having a porous structure and an infrared-absorbing resin composition layer containing a resin composition, the infrared-absorbing resin composition layer having a transmittance of not less than 5% and not more than 85% with respect to the first light that is in a wavelength range greater than 800 nm but smaller than or equal to 2000 nm; and a step of selectively irradiating only a predetermined region of the infrared-absorbing resin composition layer of the stack with the first light to fill pores in the porous structure of the porous layer with the resin composition contained in the predetermined region of the infrared-absorbing resin composition layer. The step of providing a stack may be a step of producing a stack, or a step of providing a produced stack. The step of providing a stack includes, for example, a step of forming an infrared-absorbing resin composition layer on the porous layer. With reference to FIG. **5A,** FIG. **5B,** FIG. **5C,** and FIG. **5D,** an example production method for the optical member **100** will be described. Each of FIG. **5A,** FIG. **5B,** FIG. **5C,** and FIG. **5D** is a schematic cross-sectional view showing one step of a production process for the optical member **100.**

First, as shown in FIG. **5A,** on the base layer **30,** a porous layer **10** having a porous structure to become the first layer **10** is formed. Herein, for simplicity, the porous layer and the first layer are indicated by the same reference numeral **10.** The base layer **30** is a polymer film, for example. On the base layer **30,** a porous layer **10** made of porous silica is formed, for example. The porous layer **10** is formed by the known methods mentioned above.

On the other hand, as shown in FIG. **5B,** on the release sheet (separator) **40,** an infrared-absorbing resin composition layer **20** to become the second layer **20** is formed. Herein, for simplicity, the infrared-absorbing resin composition layer and the second layer are indicated by the same reference numeral **20.** The infrared-absorbing resin composition layer **20** contains a resin composition, and has a transmittance of not less than 5% and not more than 85% with respect to the first light that is in a wavelength range greater than 800 nm but smaller than or equal to 2000 nm. Thus, by irradiating the infrared-absorbing resin composition layer **20** of a nature such that it effectively absorbs the first light with the first light (FIG. **5D**), the resin composition in the irradiated region can be selectively heated efficiently. As a result, the first layer **10,** in which second regions are disposed in a relatively high-definition pattern, is formed.

The infrared-absorbing resin composition layer **20** may be formed by using a material obtained by mixing the resin composition and a coloring material that absorbs the first light, for example. The resin composition hardly needs to absorb the first light. Moreover, a resin composition layer made of the resin composition may be formed, and a coloring material layer containing a coloring material that absorbs the first light may be formed on the resin composition layer. At this time, the resin composition layer and the coloring material layer on the resin composition layer constitute the infrared-absorbing resin composition layer. Separately forming the coloring material layer may provide an advantage of suppressing degradation of the coloring material. A radical initiator (AIBN, BPO, etc.) and acrylic acid or the like remaining in the adhesive may deteriorate the coloring material to detract from its function of absorbing near-infrared rays (the first light). A part or a whole of the coloring material layered on the resin composition layer may permeate and diffuse in the resin composition to become integral with the resin composition.

As the coloring material, either a dyestuff(dye)type or a pigment-type may be used. However, a dyestuff-type is preferable for its ability to be uniformly distributed in the resin composition (e.g., a pressure-sensitive adhesive).

As the coloring material, those which absorb light in a wavelength range of not less than 900 nm and not more than 1500 nm are preferable. Specific examples may be those which are phthalocyanine-based, azo-based, phenylenediamine-based, anthraquinone-based, naphthoquinone-based, and cyanine-based. Each of these may be used alone, or two or more of them may be mixed for use. Among these, phenylenediamine-based ones are preferable because they have a high transmittance with respect to visible light. As a phenylenediamine-based dye, a diimonium compound can be suitably used, for example.

Next, as shown in FIG. **5C,** the infrared-absorbing resin composition layer **20** is placed on the porous layer **10.** Herein, an example is illustrated where the optical member **100** is produced by using a film-shaped base layer **30** and a release sheet **40.** The method of placing the infrared-absorbing resin composition layer **20** on the porous layer **10** through overlaying films upon each other provides for a good mass producibility. It will be appreciated that the step of forming the infrared-absorbing resin composition layer **20** on the porous layer **10** is not limited to the above; various methods (various application techniques or printing techniques, etc.) that are known as methods for forming a resin layer (e.g., a pressure-sensitive adhesive layer) can be used.

Next, the infrared-absorbing resin composition layer **20** in only predetermined regions within the region of the porous layer **10** to become the second regions **14** are selectively irradiated with the first light **LB,** whereby the pores in the porous structure of the porous layer are filled with the resin composition contained in the predetermined regions of the infrared-absorbing resin composition layer.

The first light is preferably laser light, and is preferably emitted from a solid-state laser. The lower limit of the transmittance of the infrared-absorbing resin composition layer **20** with respect to the first light, i.e., the laser light to be used, is preferably 5% or more, 10% or more, 20% or more, or 30% or more, and its upper limit is preferably 85% or less, 80% or less, 75% or less, or 70% or less. Even more preferably, the infrared-absorbing resin composition layer **20** has a transmittance of not less than 20% and not more than 75% with respect to the first light, and still more preferably a transmittance of not less than 30% and not more than 70%. Thus, by irradiating the predetermined regions of the infrared-absorbing resin composition layer **20** of a nature such that it effectively absorbs laser light with laser light, the resin composition in the irradiated region can be selectively heated efficiently. As a result, the first layer **10,** in which the second regions **14** are disposed in a relatively high-definition pattern, is formed.

Preferably, the spatial intensity distribution of the laser light (beam) has a Gaussian distribution or a top hat distribution, although this is not a limitation. The beam shape may be a circle or a rectangle. Converging optics such as an objective lens may be used to converge light. When the beam shape is a circle, the focal diameter (spot diameter) is in the range of e.g. not less than 10 um and not more than 150 μm, and even more preferably in the range of not less than 30 um and not more than 100 um. By setting the focal diameter to be 10 μm or more, a sufficient depth of focus is obtained, which allows for stabilization of the process. By setting the focal diameter to be 150 μm or less, lowering of energy density can be suppressed, and formation of a desired pattern (formation of second regions) can be facilitated. Because of an increase in the number of pulses that can be emitted per unit time, the number of patterns to be formed per unit time is increased, thus promoting producibility.

From the standpoint of performing pattern formation in a short time, it is preferable to use pulsed laser; preferably, laser having a pulse width on the order of nanoseconds to microseconds is used. While too short a pulse width may not induce any heating, a pulse width within the aforementioned ranges will cause a photochemical reaction that induces heating, and thus allow a sufficient energy injection time to be obtained, whereby a desired pattern formation can be achieved. Moreover, a pulse width within these ranges will allow one pattern to be formed in a short time, which is preferable from producibility standpoints.

Although not particularly limited, the repetition frequency of the pulsed laser light is preferable as high as possible from producibility standpoints, and may be appropriately adjusted in the range of 10 kHz to 5,000 kHz.

Example types of laser oscillators satisfying the aforementioned requirements include YAG lasers, YLF lasers, $YVO_4$ lasers, fiber lasers, and semiconductor lasers, although this is not a limitation.

While the irradiation conditions of laser light may be set to any appropriate conditions, preferably the energy density is not less than 1 $J/cm^2$ and not more than 20 $J/cm^2$. An energy density within this range provides sufficient energy for forming a desired pattern, and also is able to suppress vaporization and pyrolysis of the irradiated object. The energy density is calculated from the following equation.

energy density [$J/cm^2$] = pulse energy [J] / convergence spot area [$cm^2$] (Note that pulse energy [J] = power [W] / repetition frequency [kHz].)

From the standpoint of rapidly performing desired pattern processing, a galvanometer scanner or a polygon scanner, or a scanner unit that combines both is preferably used. By using such a scanner unit, pattern formation can be performed with a scan speed in the range of 0.01 m/second to 170 m/second in the scanning direction of laser light.

The pattern pitch can be arbitrarily set by adjusting the repetition frequency of laser pulses according to the scan speed, and may be set within a range of 10 um to 500 um, for example.

The pattern pitch along a perpendicular direction to the scanning direction can be appropriately adjusted by controlling the relative positioning between the scanner unit and the irradiated object. Under such control, by using a precision stage with a drive shaft, the pattern can be formed at a desired pitch by sucking and fixing a sheet-like irradiated object on the stage surface, and irradiating it with laser light while feeding it at regular intervals in a direction perpendicular to the scanning direction, for example. Alternatively, a scanner unit can be used to form a pattern on a long, wound raw film that is being transferred intermittently or continuously by roll-to-roll transfer method.

[Examples]

Hereinafter, embodiments of the present invention will be described by way of Examples; however, embodiments of the present invention are not to be limited by these Examples. The method for measuring each characteristic was as follows.

(1) refractive index

After the first layer was formed on an acrylic film, it was cut into a 50 mm × 50 mm size, and the first layer was attached onto the surface of a glass plate (thickness: 3 mm) via a pressure-sensitive adhesive layer. A central portion of the rear surface (diameter: about 20 mm) of the glass plate was painted with a black marker, thereby producing a sample which does not reflect at the rear surface of the glass plate. The above sample was set in an ellipsometer (manufactured by J. A. Woollam Japan: VASE), and its refractive index was measured under the conditions of: a wavelength of 500 nm; and an angle of incidence of not less than 50 degrees and not more than 80 degrees.

(2) light extraction effect

An optical member as obtained according to Example 1 below was attached onto a resin plate having a thickness of 2 mm (manufactured by Mitsubishi Chemical Corporation; "Acrylite (Shinkolite) EX001") via an acrylic pressure-sensitive adhesive (refractive index 1.47; thickness 5 um), and light was allowed to enter at an end of the resin plate. The distribution of light emitted from a main surface of the resin plate was observed visually and with a microscope.

[Manufacturing Example 1]

preparation of a coating solution (micropored particle-containing solution) forming a porous layer (the first region of the first layer) and production of a precursor film (pre-aging)

(1) gelation of silicon compound

To 2.2 g of dimethyl sulfoxide (DMSO), 0.95 g of methyltrimethoxysilane (MTMS) as a precursor of the gelatinous silicon compound was dissolved to prepare Mixture A. To this Mixture A, 0.5 g of 0.01 mol/L oxalic acid aqueous solution was added, and stirred at room temperature for 30 minutes to hydrolyze the MTMS, thereby producing Mixture B containing tris(hydroxy)methylsilane.

To 5.5 g of DMSO, 0.38 g of 28 mass% ammonia and 0.2 g of pure water were added, after which the aforementioned Mixture B was further added, and stirred at room temperature for 15 minutes, thereby effecting gelation of the tris(hydroxy)methylsilane, whereby Mixture C containing a gelatinous silicon compound (polymethyl silsesquioxane) was obtained.

(2) aging process

Mixture C, containing the gelatinous silicon compound as prepared above, was incubated as it was at 40°C for 20 hours, thereby effecting an aging process.

(3) pulverization process

Next, the gelatinous silicon compound that had undergone the aging process as described above was crushed into granules of several millimeters to several centimeters in size, using a spatula. Next, 40 g of isopropyl alcohol (IPA) was added to Mixture C, and this was stirred lightly and allowed to stand at room temperature for 6 hours, thereby decanting the solvent and catalyst in the gel. The same decantation process was performed three times to replace the solvent, whereby Mixture D was obtained. Next, the gelatinous silicon compound in Mixture D was subjected to a pulverization process (high-pressure media-less pulverization). For the pulverization process (high-pressure media-less pulverization), a homogenizer (manufactured by SMT Co., Ltd.; product name: "UH-50") was used. Into a 5-cc screw bottle, 1.85 g of the gelatinous compound in Mixture D and 1.15 g of IPA were weighed, after which pulverization was performed at 50 W, 20 kHz for 2 minutes.

This pulverization process pulverized the gelatinous silicon compound in the above Mixture D, and thus Mixture D' resulted which was a sol solution of the pulverized material. The volume-averaged particle size, which indicates the grain size variation of the pulverized material in Mixture D', was confirmed using a dynamic light scattering Nanotrac particle size analyzer (manufactured by Nikkiso Co., Ltd.; UPA-EX150) to be 0.50 to 0.70. Furthermore, to 0.75 g of this sol solution (Mixture C'), 0.062 g of a 1.5 mass% concentration MEK (methyl ethyl ketone) solution of a photobase generator (Wako Pure Chemical Industries, Ltd.; product name: WPBG266), and 0.036 g of a 5% concentration MEK solution of bis(trimethoxysilyl)ethane were added, whereby Coating Solution A for forming a porous layer (micropored particle-containing solution) was obtained. The coating solution for forming a porous layer contained porous silica that included silsesquioxane as a fundamental structure.

A coating film was formed by applying (coating) the above coating solution onto the surface of an acrylic resin film (thickness: 40 um) which was prepared according to Manufacturing Example 1 in Japanese Laid-Open Patent Publication No. 2012-234163. The coating film was treated at a temperature of 100°C for 1 minute and then dried, and the dried coating film was further irradiated with UV for an amount of light irradiation (energy) of 300 mJ/cm$^2$ using light having a wavelength of 360 nm, thereby providing a stack (an acrylic film with a silica porous layer) in which a porous layer (porous silica based on chemical bonds between silica micropored particles) had been formed on the acrylic resin film. The porous layer had a refractive index of 1.15.

[morphological evaluation of optical member]

The optical member obtained according to Example was subjected to an observation of a frontal image through an optical microscope, and also a cross-sectional SEM image thereof of obtained as follows.

The specific procedure was as follows. The separator was removed to expose the dye pressure-sensitive adhesive surface, and Pt-Pd coating was applied onto the pressure-sensitive adhesive surface for 10 seconds with a magnetron sputter (E-1030) manufactured by Hitachi High-Technologies Corporation. Next, a protective film (formed by carbon deposition) for FIB processing was formed on the pressure-sensitive adhesive surface at normal temperature using a FIB-SEM (Helios G4 UX) manufactured by FEI Company Japan Ltd. Furthermore, the sample was cooled down to -160°C in the same machine, and while cooled to -160°, FIB processing was performed with the main surface of the optical member inclined at 52° to a converged ion beam. SEM observation of the cross section formed by the FIB processing was performed.

FIB-SEM setting conditions
acceleration voltage: FIB 30kV, SEM 2kV
observation image: backscattered electron image
set temperature: -160°C

[near-infrared transmittance measurement for dye pressure-sensitive adhesive]

With a PET separator (thickness 38 μm; refractive index 1.57) provided on one main surface, measurement light was allowed to enter through the dye pressure-sensitive adhesive surface, and a transmittance with respect to the wavelength of the laser light used was measured. Hitachi's spectrophotometer U-4100 was used for the near-infrared transmittance measurement.

light extraction effect

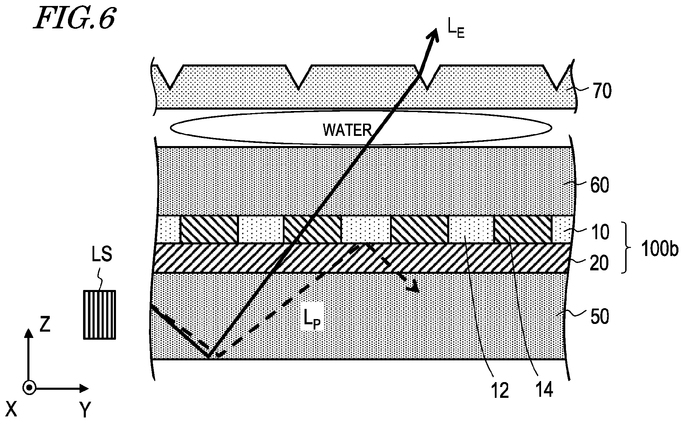

A separator was removed off the optical member obtained according to Example below, and this was attached onto a resin plate (manufactured by Mitsubishi Chemical Corporation; Acrylite (Shinkolite) EX001) having a thickness 2 mm. Further thereupon, a concavo-convex patterned film was layered via water (refractive index 1.33); LED light was allowed to enter an end of the resin plate; and the effect of light extraction was visually evaluated. FIG. **6** schematically shows the configuration of a light distribution element sample used for the evaluation of the light extraction effect. The optical member **100b** is placed on the resin plate **50,** and a separator **60** is placed on the optical member **100b.** Via water, a concavo-convex patterned film **70** was placed on the separator **60,** and the distribution of outgoing light $L_E$ was visually evaluated.

[Manufacturing Example 1]

production of concavo-convex patterned film

A concavo-convex patterned film was produced according to a method described in Japanese National Phase PCT Laid-Open Publication No. 2013-524288. Specifically, the surface of a polymethyl methacrylate (PMMA) film was coated with a lacquer (manufactured by Sanyo Chemical Co., FINECURE RM-64); an optical pattern was embossed on the film surface including the lacquer; and thereafter the lacquer was cured to produce the concavo-convex patterned film of interest. The concavo-convex patterned film had a total thickness of 130 um, and a haze of 0.8%.

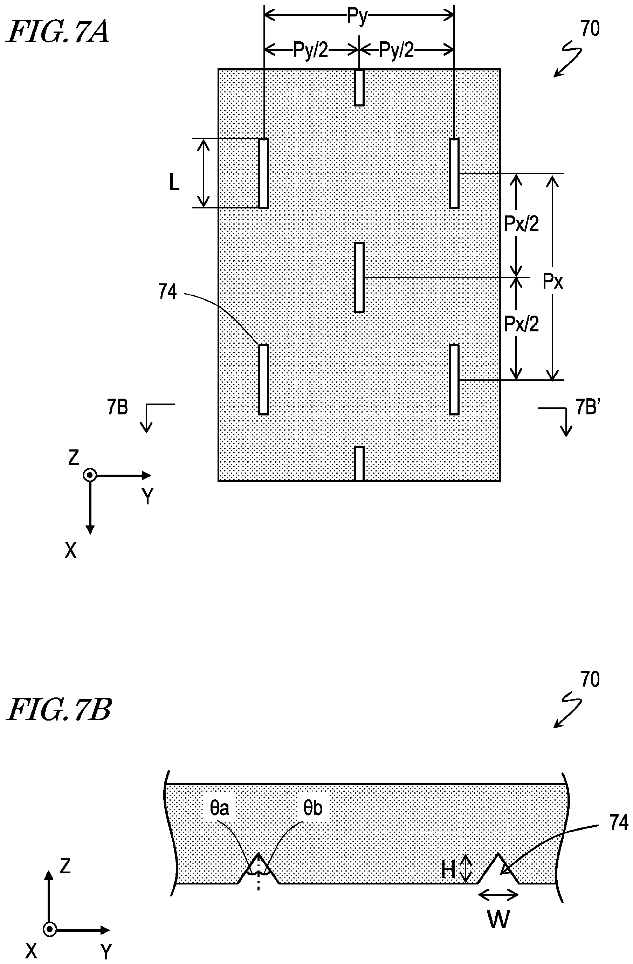

FIG. **7A** shows a plan view of a portion of the resultant concavo-convex patterned film **70** as viewed from the concavo-convex surface side. FIG. **7B** shows a cross-sectional view of the concavo-convex patterned film at **7B-7B'** in FIG. **7A.** A plurality of dents **74** having a length **L** of 80 um, a width **W** of 14 um, and a depth **H** of 10 um and having a triangular cross-section were disposed at intervals of **E** (155 um) along the X axis direction. Furthermore, patterns of such dents **74** were disposed at intervals of **D** (100 um) along the Y axis direction. The dents **74** had a density of 3612 dents/cm$^2$ on the concavo-convex patterned film surface. In FIG. **7B,** θ**a** and θ**b** were both 41°, and the dents **74** had a percentage footprint of 4.05% in a plan view of the film as seen from the concavo-convex surface side.

Next, Examples 1 to 6 and Comparative Examples 1 and 2 will be illustrated to describe characteristic aspects of optical members according to embodiments of the present invention. The configurations and characteristics of the optical members according to Examples 1 to 6 and Comparative Examples 1 and 2 are all shown in Table 1.

[Example 1]

As an infrared-absorbing resin composition layer (second layer), a layered structure including a pressure-sensitive adhesive layer (resin composition layer) containing no dye and a dye layer formed on the pressure-sensitive adhesive layer was used. To 100 mass parts of a solvent (MIBK/EtOH/$H_2O$; mass ratio 1:9:1), 0.2 mass parts of dyestuff-type dye CIR-RL manufactured by Japan Carlit Co., Ltd. (a phenylenediamine-based diimonium compound) was added to prepare a dye solution.

One of the separators of a double-sided pressure-sensitive adhesive A (PET separator/ acrylic pressure-sensitive adhesive A/ PET separator, thicknesses: 38 μm/10 μm/38 μm) produced by the below-described method was removed. The aforementioned dye solution was introduced to the exposed surface of the acrylic pressure-sensitive adhesive, formed into a film with a wet thickness of 33 μm, and dried by being placed in a heating oven set at 100°C for two minutes, whereby a dye layer was obtained. The stack of the optical pressure-sensitive adhesive layer and the dye layer had a transmittance of 49% with respect to laser light having a wavelength of 1064 nm.

The stack of the optical pressure-sensitive adhesive layer and the dye layer was attached onto the main surface of the porous layer of the stack (an acrylic film with a silica porous layer) obtained according to Manufacturing Example 1. This was cut into an outer shape of a 100 mm size, whereby a test piece for producing an optical member was obtained.

While fixed on a vacuum suction stage, the resultant test piece was irradiated with near-infrared nanosecond pulsed fiber laser under the following conditions, whereby an optical member was produced.

laser oscillator: JenLas fiber ns 20, manufactured by Jenoptik
wavelength: 1064 nm
objective lens: fθ lens (f82 mm)
galvanometer scanner: intelliScan14, manufactured by ScanLab
beam intensity distribution: Gaussian
spot size: φ60 μm
repetition frequency: 12.5 kHz
scan speed: 2500 mm/second
pattern pitch: 200 um
power: 5.6 W
pulse energy: 448 μJ
energy density: 15.8 J/cm$^2$

A frontal image of the resultant optical member was observed with an optical microscope, which revealed that essentially circular second regions having a diameter of 50 μm had been formed with a pitch of 200 um.

Using the light distribution element sample shown in FIG. **6,** the effect of light extraction was evaluated, whereby it was confirmed that LED light was being selectively emitted from only the 50 mm × 50 mm region where the second regions had been formed.

[Example 2]

As an infrared-absorbing resin composition layer (second layer), acrylic pressure-sensitive adhesive B produced by the below-described method was used. The layer of acrylic pressure-sensitive adhesive B had a transmittance of 41% with respect to laser light having a wavelength of 1064 nm. After one of the separators of a double-sided pressure-sensitive adhesive B (PET separator/ acrylic pressure-sensitive adhesive B/ PET separator, thickness 38 μm/10 μm/38 μm) was removed, this was attached to the main surface of the porous layer of the stack (an acrylic film with a silica porous layer) obtained according to Manufacturing Example 1. Then, a test piece for producing an optical member was produced in a similar manner to the description of Example 1.

While fixed on a vacuum suction stage, the resultant test piece was irradiated with near-infrared nanosecond pulsed fiber laser under the following conditions, whereby an optical member was produced.

laser oscillator: JenLas fiber ns 20, manufactured by Jenoptik
wavelength: 1064 nm
objective lens: fθ lens (f82 mm)
galvanometer scanner: intelliScan14, manufactured by ScanLab
beam intensity distribution: shaped into a rectangular beam by DOE
spot size: square with each side being 60 um
repetition frequency: 12.5 kHz
scan speed: 2500 mm/second
pattern pitch: 200 um
power: 4.5 W
pulse energy: 360 μJ
energy density: 10.0 J/cm$^2$

The resultant optical member was evaluated similarly to Example 1, which revealed that square-shaped second regions, each of whose side was about 70 um long, had been formed with a pitch of 200 μm.

[Example 3]

In Examples 3 to 6 illustrated below, as an infrared-absorbing resin composition layer (second layer), a layered structure including a pressure-sensitive adhesive layer (resin composition layer) containing no dye and a dye layer formed on the pressure-sensitive adhesive layer was used, similarly to Example 1. In Example 3, to 100 mass parts of a solvent (MIBK), 0.52 mass parts of dyestuff-type dye CIR-RL manufactured by Japan Carlit Co., Ltd. (a phenylenediamine-based diimonium compound) was added to prepare a dye solution. Similarly to Example 1, one of the separators of a double-sided pressure-sensitive adhesive A (PET separator/ acrylic pressure-sensitive adhesive A/ PET separator, thicknesses: 38 μm/10 um/38 um) was removed. The aforementioned dye solution was introduced to the exposed surface of the acrylic pressure-sensitive adhesive, formed into a film with a wet thickness of 33 um, and dried by being placed in a heating oven set at 100°C for two minutes, whereby a dye layer was obtained. The stack of the optical pressure-sensitive adhesive layer and the dye layer had a transmittance of 28% with respect to laser light having a wavelength of 1060 nm.

While fixed on a vacuum suction stage, the resultant test piece was irradiated with near-infrared nanosecond pulsed fiber laser under the following conditions, whereby an optical member was produced.

laser oscillator: redENERGY G4, manufactured by SPI
wavelength: 1060 nm
scanner: LSE310, manufactured by Next Scan Technology (f350 mm)
beam intensity distribution: Gaussian
spot size: φ55 μm
repetition frequency: 500 kHz
scan speed: 50 m/second
pattern pitch: 100 μm
power: 55 W
pulse energy: 110 μJ
energy density: 4.6 J/cm$^2$

The resultant optical member was evaluated similarly to Example 1, which revealed that circular second regions having a diameter of about 30 um had been formed with a pitch of 100 μm.

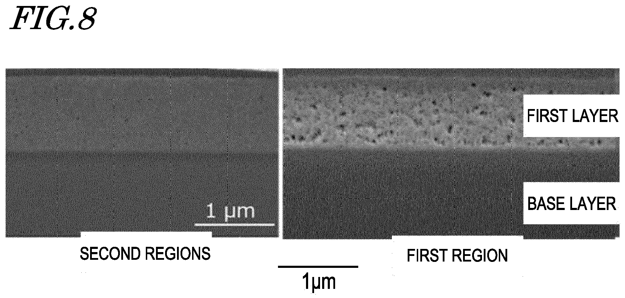

As indicated by a cross-sectional SEM image shown in FIG. **8,** pores were hardly seen in the second regions of the first layer formed through laser irradiation. On the other hand, a multitude of minute pores (fine voids) were seen in the first region of the first layer.

[Example 4]

In Example 4, a test piece was produced similarly to Example 3. In Example 4, however, to 100 mass parts of a solvent (MIBK), 0.43 mass parts of dyestuff-type dye CIR-RL manufactured by Japan Carlit Co., Ltd. (a phenylenediamine-based diimonium compound) was added to prepare a dye solution. The stack of the optical pressure-sensitive adhesive layer and the dye layer had a transmittance of 37% with respect to laser light having a wavelength of 1060 nm.

While fixed on a vacuum suction stage, the resultant test piece was irradiated with near-infrared nanosecond pulsed fiber laser under the following conditions, whereby an optical member was produced.

laser oscillator: redENERGY G4, manufactured by SPI
wavelength: 1060 nm
scanner: LSE310, manufactured by Next Scan Technology (f350 mm)
beam intensity distribution: Gaussian
spot size: φ55 μm
repetition frequency: 500 kHz
scan speed: 100 m/second
pattern pitch: 200 um
power: 86 W
pulse energy: 172 pJ
energy density: 7.2 J/cm$^2$

The resultant optical member was evaluated similarly to Example 1, which revealed that circular second regions having a diameter of 42 um had been formed with a pitch of 200 um.

[Example 5]

In Example 5, the same test piece as in Example 4 was used. The stack of the optical pressure-sensitive adhesive layer and the dye layer had a transmittance of 37% with respect to laser light having a wavelength of 1060 nm.

While fixed on a vacuum suction stage, the resultant test piece was irradiated with near-infrared nanosecond pulsed fiber laser under the following conditions, whereby an optical member was produced.

laser oscillator: redENERGY G4, manufactured by SPI
wavelength: 1060 nm
scanner: LSE310, manufactured by Next Scan Technology (f350 mm)
beam intensity distribution: Gaussian
spot size: φ55 um
repetition frequency: 500 kHz
scan speed: 100 m/second
pattern pitch: 200 um
power: 148 W
pulse energy: 296 pJ
energy density: 12.5 J/cm$^2$

The resultant optical member was evaluated similarly to Example 1, which revealed that circular second regions having a diameter of 99 um had been formed with a pitch of 200 um. In other words, because of increasing the laser power from Example 4, the second regions had a large diameter than in Example 4.

[Example 6]

In Example 6, the same test piece as in Example 3 was used. The stack of the optical pressure-sensitive adhesive layer and the dye layer had a transmittance of 28% with respect to laser light having a wavelength of 1060 nm.

While fixed on a vacuum suction stage, the resultant test piece was irradiated with near-infrared nanosecond pulsed fiber laser under the following conditions, whereby an optical member was produced.

laser oscillator: redENERGY G4, manufactured by SPI
wavelength: 1060 nm
scanner: LSE310, manufactured by Next Scan Technology (f350 mm)
beam intensity distribution: Gaussian
spot size: φ55 μm
repetition frequency: 500 kHz
scan speed: 100 m/second
pattern pitch: 200 um
power: 86 W
pulse energy: 172 pJ
energy density: 7.2 J/cm$^2$

The resultant optical member was evaluated similarly to Example 1, which revealed that essentially circular second regions having a diameter of 79 um had been formed with a pitch of 200 um. The laser irradiation conditions were the same as in Example 4, but the transmittance with respect to the laser light being lower than in Example 4 caused a larger diameter of the second regions than that in Example 4.

[Comparative Example 1]

Acrylic pressure-sensitive adhesive A (PET separator/ acrylic pressure-sensitive adhesive A/ PET separator, thicknesses: 38 pm/10 um/38 um) produced by the below-described method was attached onto a main surface of the porous layer of the stack (an acrylic film with a porous layer) shown in Manufacturing Example 1. This was cut into an outer shape of a 100 mm size, whereby a test piece was obtained. The layer of acrylic pressure-sensitive adhesive A had a transmittance of 42% with respect to laser light having a wavelength of 9400 nm.

While fixed on a vacuum suction stage, the test piece was irradiated with $CO_2$ laser under the following conditions, whereby an optical member was produced.

laser oscillator: Diamond J-3, manufactured by Coherent
wavelength: 9.4 um
objective lens: fθ lens (f120 mm)
galvanometer scanner: digital galvanometer scanner, manufactured by Canon
beam intensity distribution: Gaussian
convergence spot size: φ87 μm
Z offset amount:-1.6 mm (from the focus position)
repetition frequency: 5 kHz
scan speed: 1000 mm/second
pattern pitch: 200 um
power: 5.0 W
pulse energy: 1000 μJ
energy density: 5.5 J/cm$^2$ (calculated spot diameter: φ152 μm)

A morphological observation of the resultant optical member was made with an optical microscope, whereby it was confirmed that a pattern had been formed. The effect of light extraction was also checked, whereby it was confirmed that LED light was being selectively emitted from only the 50 mm × 50 mm region where the second regions had been formed.

However, the size (diameter) of the pattern formed was 270 um, which was larger than those in Examples. This is presumably because the laser light had a wavelength of 9.4 um, which is in the far infrared wavelength band and caused the pattern size to be larger than the size of the actually irradiated laser spot owing to thermal influences. Also from the standpoint of wavelength dependence of the spot size, a longer wavelength makes it difficult to obtain a smaller spot size.

[Comparative Example 2]

In order to obtain a smaller spot, the test piece according to Comparative Example 1 was irradiated with near-infrared nanosecond pulsed fiber laser under the following conditions to produce an optical member. The layer of acrylic pressure-sensitive adhesive A had a transmittance of 89% with respect to laser light having a wavelength of 1064 nm.

laser oscillator: JenLas fiber ns 20, manufactured by Jenoptik

wavelength: 1064 nm
objective lens: fθ lens (f82 mm)
galvanometer scanner: intelliScan14, manufactured by ScanLab
beam intensity distribution: shaped into a rectangular beam by DOE
spot size: square with each side being 60 um
repetition frequency: 12.5 kHz
scan speed: 2.5 m/second
pattern pitch: 200 um
power: 4.5 W
pulse energy: 360 pJ
energy density: 10.0 J/cm$^2$

In this case, no pattern was formed, and no light extraction effect was exhibited. This is presumably because the pressure-sensitive adhesive layer of the test piece had an excessively high transmittance (i.e., too little absorption) with respect to the laser light. Although second regions could certainly be formed by adjusting the irradiation conditions of laser light, etc., the efficiency and pattern precision would become lower.

[Table 1]

| | coloring material | method of introducing coloring material | resin composition for second layer | wavelength irradiation light (nm) | transmittance (%) | pattern size (μm) | pattern formation light extraction | definition |
|---|---|---|---|---|---|---|---|---|
| Example 1 | dyephenylenediamine -based | introduced in resin layer | acrylic tackiness agent A | 1064 | 49 | 50 | OK | OK |
| Example 2 | dyephenylenediamine -based | mixed in resin | acrylic tackiness agent B (no cross-linkinq agent) | 1064 | 41 | 70 | OK | OK |
| Example 3 | dyephenylenediamine -based | introduced in resin layer | acrylic tackiness agent A | 1060 | 28 | 30 | OK | OK |
| Example 4 | dyephenylenediamine -based | introduced in resin layer | acrylic tackiness agent A | 1060 | 37 | 42 | OK | OK |
| Example 5 | dyephenylenediamine -based | introduced in resin layer | acrylic tackiness agent A | 1060 | 37 | 99 | OK | OK |
| Example 6 | dyephenylenediamine -based | introduced in resin layer | acrylic tackiness agent A | 1060 | 28 | 79 | OK | OK |
| Comparative Example 1 | - | - | acrylic tackiness agent | 9400 | 42 | 270 | OK | NG |
| Comparative Example 2 | - | - | acrylic tackiness agent | 1064 | 89 | - | NG | - |

The acrylic pressure-sensitive adhesives used in Examples and Comparative Examples were produced by the following method.

preparation of acrylic pressure-sensitive adhesive solution A and production of double-sided pressure-sensitive adhesive tape A

Into a four-necked flask equipped with stirring blades, a thermometer, a nitrogen gas inlet tube, and a cooler, 91 mass parts of butyl acrylate, 7 mass parts of N-acryloyl morpholine, 3 mass parts of acrylic acid, 0.3 mass parts of 2-hydroxybutyl acrylate, and 0.1 mass parts of 2,2'-azobisisobutyronitrile as a polymerization initiator, and 200 mass parts of ethyl acetate were placed. After nitrogen replacement by introducing nitrogen gas with gentle stirring, the liquid temperature in the flask was kept at around 55°C and a polymerization reaction was carried out for 8 hours, thereby preparing an acrylic polymer solution. The acrylic polymer had a mass average molecular weight of 2,200,000.

To 100 mass parts in solid content of the resultant acrylic polymer solution, 0.25 mass parts of dibenzoyl peroxide (1-minute half-life: 130°C) as a cross-linking agent, 0.15 parts of a polyisocyanate-based cross-linking agent composed of a trimethylolpropane adduct of tolylene diisocyanate (manufactured by TOSOH CORPORATION; Coronate L), and 0.1 mass parts of 3-glycidoxypropyltrimethoxysilane (manufactured by Shin-Etsu Silicone Co., Ltd; KBM403) as a silane coupling agent were blended, thereby preparing acrylic pressure-sensitive adhesive solution A.

Next, the aforementioned acrylic pressure-sensitive adhesive solution A was applied to one side of a silicone-treated polyethylene terephthalate (PET) film (manufactured by Mitsubishi Chemical Corporation; thickness: 38 μm) so that the thickness of the pressure-sensitive adhesive layer after drying was 10 um; and this was dried at 150°C for 3 minutes, thereby producing a pressure-sensitive adhesive layer. The pressure-sensitive adhesive layers were attached together so that the silicone-treated surface of the above PET film faced the pressure-sensitive adhesive layer, thereby producing a double-sided pressure-sensitive adhesive tape.

preparation of acrylic pressure-sensitive adhesive solution B and production of double-sided pressure-sensitive adhesive tape B

Acrylic pressure-sensitive adhesive solution B was prepared and a double-sided pressure-sensitive adhesive tape B was produced in similar manners to the preparation of acrylic pressure-sensitive adhesive solution A and the production of the double-sided pressure-sensitive adhesive tape A, except that: in the preparation of acrylic pressure-sensitive adhesive solution A, dibenzoyl peroxide was not used, and 0.2 mass parts of dyestuff-type dye CIR-RL manufactured by Japan Carlit Co., Ltd. (a phenylenediamine-based diimonium compound) was added to 100 mass parts in solid content of acrylic polymer solution.

By using the optical member **100a** according to an embodiment of the present invention, light distribution elements such as the following can be obtained, for example.

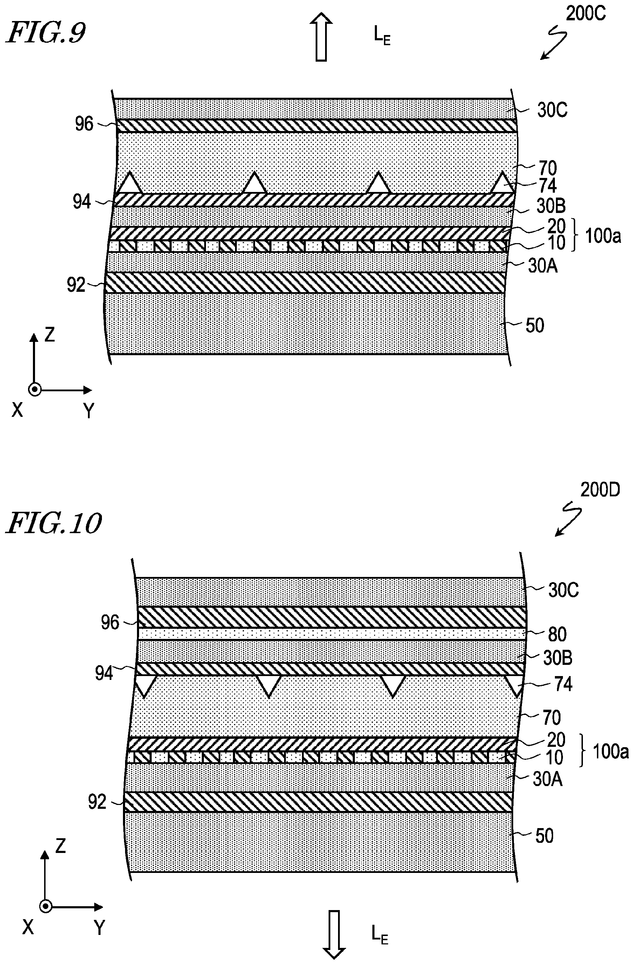

FIG. **9** shows a schematic cross section of a light distribution element **200C** according to an embodiment of the present invention, and FIG. **10** shows a schematic cross section of a light distribution element **200D** according to an embodiment of the present invention.

The light distribution element **200C** shown in FIG. **9** includes base layers **30A, 30B** and **30C,** a patterned film **70,** and adhesive layers **92, 94** and **96,** in addition to the light distribution element **200A** shown in FIG. **2.** The patterned film **70** and the adhesive layer **94** constitute a redirection layer having a plurality of internal spaces **74.**

The light distribution element **200D** shown in FIG. **10** includes base layers **30A, 30B** and **30C,** a patterned film **70,** a low-refractive index layer **80,** and adhesive layers **92, 94** and **96,** in addition to the light distribution element **200A** shown in FIG. **2.** The low-refractive index layer **80** is composed of a porous layer, as is the aforementioned first layer, for example. In the light distribution element **200D,** too, the patterned film **70** and the adhesive layer **94** constitute a redirection layer having a plurality of internal spaces **74.**

The light distribution element **200C** shown in FIG. **9** causes light entering the light guiding layer **50** to be emitted upward in the figure. On the other hand, the light distribution element **200D** shown in FIG. **10** causes light entering the light guiding layer **50** to be emitted downward in the figure because light that is guided from the redirection layer undergoes total internal reflection in the low-refractive index layer **80.**

Thus, by adopting a configuration in which stacks that are layered on a plurality of base layers are attached together with adhesive layers, it becomes possible to mass-produce a light distribution element by a roll-to-roll method or a roll-to-sheet method.

The thicknesses of the base layers **30A, 30B** and **30C** are, each independently, e.g. not less than 1 um and not more than 1000 um, preferably not less than 10 um and not more than 100 μm, and even more preferably not less than 20 um and not more than 80 um. The refractive indices of the base layers **30A, 30B** and **30C** are, each independently, preferably not less than 1.40 and not more than 1.70, and even more preferably not less than 1.43 and not more than 1.65.

The thicknesses of the adhesive layers **92, 94** and **96** are, each independently, e.g., not less than 0.1 um and not more than 100 um, preferably not less than 0.3 um and not more than 100 μm, and even more preferably not less than 0.5 μm and not more than 50 um. The refractive indices of the adhesive layers **92, 94** and **96** are, each independently, preferably not less than 1.42 and not more than 1.60, and more preferably not less than 1.47 and not more than 1.58. The refractive indices of the adhesive layers **92, 94** and **96** are preferably close to the refractive index of the light guiding layer **50** or the patterned film **70** that they are in contact with, such that the absolute value of the difference in refractive index is preferably 0.2 or less.

## INDUSTRIAL APPLICABILITY

An optical member according to the present invention may be combined with a light guiding layer and the like into a light distribution element, and is applicable to frontlights, backlights, window/facade illumination, signage, signal illumination, window illumination, wall surface illumination, desk illumination, solar applications, decorative illumination, light shields, light masks, roof lighting, or other public or general illumination. For example, an optical member according to the present invention is suitably used as a component element of a frontlight in a reflection type display, which is an example of signage. Using an optical member according to the present invention allows an image or graphic on a reflection type display to be observed without visible blur or other optical disadvantages that may be caused by scattered or diffracted light.

## REFERENCE SIGNS LIST

**10, 10a, 10b:** first layer
**12, 12a, 12b:** first region
**14, 14a, 14b:** second region
**20:** second layer
**30:** base layer
**50:** light guiding layer
**60:** base layer
**70:** concavo-convex patterned film
**74:** dent, internal space
**100, 100a, 100b:** optical member
**200A, 200B, 200C, 200D:** light distribution element

## Claims

**1.** An optical member comprising:

a first layer having a porous structure; and
a second layer that is in contact with a first main surface of the first layer, wherein,
the second layer contains a resin composition, and has a transmittance of not less than 5% and not more than 85% with respect to first light that is in a wavelength range greater than 800 nm but smaller than or equal to 2000 nm; and
the first layer includes a first region having the porous structure, and a second region in which pores in the porous structure are filled with the resin composition.

**2.** The optical member of claim 1, wherein the second layer has an adhesive property.

**3.** The optical member of claim 2, further comprising a release sheet that is disposed on an opposite side of the second layer from the first layer.

**4.** The optical member of any one of claims 1 to 3, wherein the resin composition contains a coloring material that absorbs the first light.

**5.** The optical member of any one of claims 1 to 4, wherein the second layer has a transmittance of 70% or less with respect to the first light.

**6.** The optical member of any one of claims 1 to 5, wherein, given a refractive index $n_1$ of the first region, a refractive index $n_2$ of the second region, and a refractive index $n_3$ of the second layer, $n_1<n_2$ and $n_1<n_3$ are satisfied.

**7.** The optical member of claim 6, wherein $n_1$ is 1.30 or less, and $n_2$ is 1.43 or more.

**8.** The optical member of any one of claims 1 to 7, wherein the resin composition contains a photocurable resin.

**9.** The optical member of any one of claims 1 to 8, wherein the first layer contains porous silica.

**10.** A light distribution element comprising:

the optical member of any of claims 1 to 9; and
a light guiding layer disposed at the first layer side.

**11.** The light distribution element of claim 10, further comprising a redirection layer that is disposed on an opposite side of the optical member from the light guiding layer.

**12.** A method of producing an optical member including a first layer having a porous structure and a second layer that is in contact with a first main surface of the first layer,

the second layer containing a resin composition, and
the first layer including a first region having the porous structure, and a second region in which pores in the porous structure are filled with the resin composition, wherein the method comprises:

step A of providing a stack that includes a porous layer having a porous structure and an infrared-absorbing resin composition layer containing a resin composition, the infrared-absorbing resin composition layer having a transmittance of not less than 5% and not more than 85% with respect to first light that is in a wavelength range greater than 800 nm but smaller than or equal to 2000 nm; and
step B of selectively irradiating only a predetermined region of the infrared-absorbing resin composition layer of the stack with the first light to fill pores in the porous structure of the porous layer with the resin composition contained in the predetermined region of the infrared-absorbing resin composition layer.

**13.** The production method of claim 12, wherein the infrared-absorbing resin composition layer contains the resin composition and a coloring material that absorbs the first light.

**14.** The production method of claim 12 or 13, wherein step A comprises step A1 of forming the infrared-absorbing resin composition layer on the porous layer.

**15.** The production method of claim 14, wherein step A1 comprises a step of forming the infrared-absorbing resin composition layer by using a material obtained by mixing the resin composition and the coloring material.

**16.** The production method of claim 14, wherein step A1 step comprises a step of forming a resin composition layer made of the resin composition, and forming a coloring material layer containing the coloring material on the resin composition layer.

**17.** The production method of any one of claims 12 to 16, wherein,

the resin composition contains a photocurable resin; and
the method further comprises, after step B, a step of curing the photocurable resin.

*FIG.1*

100
40
20
10
30
12
14

*FIG.2*

200A
$L_E$
60
LS
20
100a
10
50
$L_P$
Z
X
Y
12
14

FIG.3
200B
L_E
60
LS
10
100b
20
L_P
50
Z
X
Y
12
14

FIG.4A

10a
12a
14a

Z
Y
X

FIG.4B

10b
12b
14b

Z
Y
X

FIG.5A

10
30

FIG.5B

20
40

FIG.5C

40
20
10
30

FIG.5D

LB
LB
40
20
10
30
12
14

*FIG.6*

$L_E$
70
WATER
60
10
100b
20
LS
$L_P$
50
Z
X
Y
12
14

FIG. 7A
Py
Py/2
Py/2
70
L
Px/2
Px
Px/2
74
7B
7B'
Z
Y
X

FIG. 7B
70
θa
θb
74
H
W
Z
X
Y

*FIG.8*

FIRST LAYER
BASE LAYER
1 µm
SECOND REGIONS
FIRST REGION
1µm

*FIG.9*

L_E
200C
30C
96
70
74
94
30B
20
10
100a
30A
92
50
Z
X
Y

*FIG.10*

200D
30C
96
80
30B
94
74
70
20
10
100a
30A
92
50
Z
X
Y
L_E

## INTERNATIONAL SEARCH REPORT

International application No. **PCT/JP2021/035207**

**A. CLASSIFICATION OF SUBJECT MATTER**

***F21S 2/00***(2016.01)i; ***B32B 5/18***(2006.01)i; ***B32B 7/023***(2019.01)i; ***F21V 8/00***(2006.01)i; ***G02B 5/00***(2006.01)i; ***G02B 6/00***(2006.01)i; *F21Y 115/10*(2016.01)n; *F21Y 115/30*(2016.01)n
FI: F21S2/00 433; B32B5/18; B32B7/023; F21V8/00 100; G02B5/00 Z; G02B6/00 331; F21Y115:10; F21Y115:30

According to International Patent Classification (IPC) or to both national classification and IPC

**B. FIELDS SEARCHED**

Minimum documentation searched (classification system followed by classification symbols)

F21S2/00; B32B5/18; B32B7/023; F21V8/00; G02B5/00; G02B6/00; F21Y115/10; F21Y115/30

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/182100 A1 (NITTO DENKO CORP.) 26 September 2019 (2019-09-26) paragraphs [0017]-[0082], [0098]-[0103], fig. 3-11, 13 | 1-17 |
| Y | JP 2007-305544 A (MITSUBISHI RAYON CO., LTD.) 22 November 2007 (2007-11-22) paragraph [0058] | 1-17 |
| Y | JP 2013-61428 A (DAINIPPON PRINTING CO., LTD.) 04 April 2013 (2013-04-04) paragraphs [0092], [0095] | 4-11, 13-17 |
| Y | WO 2008/129727 A1 (SHARP KK) 30 October 2008 (2008-10-30) paragraphs [0037], [0038] | 4-11, 13-17 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 November 2021** | **22 November 2021** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | Telephone No. |

Form PCT/ISA/210 (second sheet) (January 2015)

**INTERNATIONAL SEARCH REPORT**
**Information on patent family members**

International application No.
**PCT/JP2021/035207**

| Patent document cited in search report | Publication date (day/month/year) | Patent family member(s) | Publication date (day/month/year) |
|---|---|---|---|
| WO 2019/182100 A1 | 26 September 2019 | US 2021/0048575 A1<br>paragraphs [0036]-[0117], [0135]-[0143], fig. 3-11, 13<br>EP 3770651 A1 | |
| JP 2007-305544 A | 22 November 2007 | (Family: none) | |
| JP 2013-61428 A | 04 April 2013 | (Family: none) | |
| WO 2008/129727 A1 | 30 October 2008 | US 2010/0061082 A1<br>paragraphs [0049], [0050]<br>CN 101636615 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015534100 W
- JP 2014031726 A
- JP 2019182100 A
- JP 2020127530 A
- WO 2019087118 A
- JP 2019087118 A
- WO 2019146628 A
- JP 2010189212 A
- JP 2008040171 A
- JP 2006011175 A
- JP 2004113966 A
- JP 2017054111 A
- JP 2018123233 A
- JP 2018123299 A
- JP 4140736 B
- JP 2012234163 A
- JP 2013524288 W